# EUROPEAN PATENT SPECIFICATION

(11) **EP 3 322 117 B1**
(45) Date of publication and mention of the grant of the patent: **23.10.2019**
(21) Application number: 17200748.6
(22) Date of filing: 09.11.2017
(51) Int. Cl.: H04L 5/00, H04W 28/02, H04W 88/06, H04W 76/16

(54) **RATE CONFIGURATION METHOD AND DEVICE**
RATENKONFIGURATIONSVERFAHREN UND -VORRICHTUNG
PROCÉDÉ ET DISPOSITIF DE CONFIGURATION DE DÉBIT

(30) Priority: 11.11.2016 WO PCT/CN2016/105472
(43) Date of publication of application: 16.05.2018
(73) Proprietor: Beijing Xiaomi Mobile Software Co., Ltd., Beijing 100085 (CN)
(72) Inventor: HONG, Wei, Beijing 100085 (CN)
(74) Representative: dompatent von Kreisler Selting Werner - Partnerschaft von Patent- und Rechtsanwälten mbB

(56) References cited:
- QUALCOMM INCORPORATED: "Report on RAN2 email discussion: [91bis#21][LTE/WiFi] UE capabilities", 3GPP DRAFT; R2-156781_LTE_WIFI_UE_CAPABILITY_EMAILDISC USSION_21, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Anaheim, CA, USA; 20151116 - 20151120 16 November 2015 (2015-11-16), XP051040425, Retrieved from the Internet: URL:http://www.3gpp.org/ftp/Meetings_3GPP_ SYNC/RAN2/Docs/ [retrieved on 2015-11-16]
- QUALCOMM INCORPORATED: "Remaining Open Issues for LWA Control Plane", 3GPP DRAFT; R2-161497_OPEN_ISSUES_LWA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian's, Malta; 20160215 - 20160219 14 February 2016 (2016-02-14), XP051055361, Retrieved from the Internet: URL:http://www.3gpp.org/ftp/Meetings_3GPP_ SYNC/RAN2/Docs/ [retrieved on 2016-02-14]
- OPPO: "Discussion on LTE-WLAN capabilities", 3GPP DRAFT; R2-161126_DISCUSION ON LTE-WLAN CAPABILITIES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian's, Malta; 20160215 - 20160219 14 February 2016 (2016-02-14), XP051055115, Retrieved from the Internet: URL:http://www.3gpp.org/ftp/Meetings_3GPP_ SYNC/RAN2/Docs/ [retrieved on 2016-02-14]

## Description

### TECHNICAL FIELD

The present disclosure relates to the field of communication technology, and more particularly, to a rate configuration method and device.

### BACKGROUND

With the development of wireless communication technology, the contradiction between the increasing wireless demands and the expensive and limited authorized spectrums is becoming more and more prominent. In order to alleviate the pressure of the authorized spectrums, operators deploy WLAN (Wireless Local Area Network) on the unauthorized spectrum to bypass the LTE (Long-Term Evolution) services so as to reduce the burden on the LTE.

At present, the LTE and the WLAN of the operators are two independently operated networks, and the WLAN is often in a low utilization state. Therefore, 3GPP (Third Generation Partnership Project) has studied in an eLWA (enhanced LTE-WLAN Aggregation, LTE-WLAN aggregation enhancement) project how to integrate the LTE and the WLAN in the wireless side deeply so as to achieve the purpose of the dynamic load balancing of the LTE and the WLAN. That is, all data from the core network is transmitted to the LTE eNB (Evolved Node B) first, then the LTE eNB will determine which data is transmitted to the eLWA UE through the LTE eNB, and which data is transmitted to the eLWA UE through the WLAN AP (Access Point) based on a series of measurement results and pre-configurations.

QUALCOMM INCORPORATED: "Report on RAN2 email discussion: [91bis#21][LTE/WiFi] UE capabilities", 3GPP DRAFT; R2156781_LTE_WIFI_UE_CAPABILITY_EMAILDISCUSSION_21, vol. RAN WG2, no. Anaheim, CA, USA; 16 November 2015 discloses the feature of transmitting the WLAN capability or an aggregated LTE and WLAN data rate capability of an eLWA UE to a LTE eNB. The same is also disclosed by "QUALCOMM INCORPORATED: "Remaining Open Issues for LWA Control Plane", 3GPP DRAFT; R2-161497_OPEN_ISSUES_LWA, vol. RAN WG2, no. St. Julian's, Malta; 20160215 - 20160219 14 February 2016.

### SUMMARY

The invention is described in the claims. The embodiments which do not fall within the scope of the claims are to be interpreted as examples useful for understanding the invention.

In order to solve the problems in the related art, the present disclosure provides a rate configuration method and device.

According to a first aspect of the embodiments of the present disclosure, there is provided a rate configuration method which is applied in an enhanced long term evolution LTE-wireless local area network WLAN aggregation eLWA user equipment UE, the method including:
generating indication information for indicating a rate capability supported by the eLWA UE; and
reporting the indication information to an LTE base station, the indication information
   being used for indicating a first rate of the eLWA UE, and the first rate being greater than a second rate configured by a WLAN access point AP for the eLWA UE.

Optionally, the reporting the indication information to the LTE base station, includes:
reporting the indication information to the LTE base station by adding the indication information to capability information of the eLWA UE.

In accordance to the present invention, the method further includes:
obtaining the second rate configured by the WLAN AP for the eLWA UE, and transmitting the second rate to the LTE base station.

Optionally, the indication information is an elwa-Parameters parameter for indicating that the eLWA UE supports simultaneous communication with the LTE base station and the WLAN AP.

Optionally, the indication information includes:
a ue-CategoryUL parameter and a first parameter value of the ue-CategoryUL parameter, the ue-CategoryUL parameter being used for indicating that the eLWA UE supports simultaneous transmission of data to the LTE base station and the WLAN AP, the first parameter value being corresponding to a first uplink rate in the first rate, and the first uplink rate being greater than a second uplink rate in the second rate; or,
a ue-CategoryDL parameter and a second parameter value of the ue-CategoryDL parameter, the ue-CategoryDL parameter being used for indicating that the eLWA UE supports simultaneous reception of data transmitted by the LTE base station and the WLAN AP, the second parameter value being corresponding to a first downlink rate in the first rate, and the first downlink rate being greater than a second downlink rate in the second rate.

Optionally, the method further includes:
receiving a scheduling indication transmitted by the LTE base station, determining a first uplink rate in the first rate based on the scheduling indication, and transmitting data to the base station at the first uplink rate; or,
receiving data transmitted by the LTE base station at a first downlink rate in the first rate.

According to a second aspect of the embodiments of the present disclosure, there is provided a rate configuration method, applied in a long term evolution LTE base station, the method including:
receiving indication information reported by an enhanced LTE-wireless local area net
   work WLAN aggregation eLWA user equipment UE, the indication information being used for indicating a rate capability supported by the eLWA UE; and
configuring a first rate for the eLWA UE according to the indication information, the first rate being greater than a second rate configured by a WLAN access point AP for the eLWA UE.

Optionally, the receiving the indication information reported by the LTE-wireless local area network WLAN aggregation enhanced eLWA user equipment UE, includes:
receiving capability information reported by the eLWA UE, and reading the indication information from the capability information.

In accordance to the present invention, the method further includes:
receiving the second rate transmitted by the eLWA UE; or,
obtaining the second rate from the WLAN AP.

Optionally, the indication information is an elwa-Parameters parameter for indicating that the eLWA UE supports simultaneous communication with the LTE base station and the WLAN AP.

Optionally, the indication information includes:
a ue-CategoryUL parameter and a first parameter value of the ue-CategoryUL parameter, the ue-CategoryUL parameter being used for indicating that the eLWA UE supports simultaneous transmission of data to the LTE base station and the WLAN AP, the first parameter value being corresponding to a first uplink rate in the first rate, and the first uplink rate being greater than a second uplink rate in the second rate; or,
a ue-CategoryDL parameter and a second parameter value of the ue-CategoryDL parameter, the ue-CategoryDL parameter being used for indicating that the eLWA UE supports simultaneous reception of data transmitted by the LTE base station and the WLAN AP, the second parameter value being corresponding to a first downlink rate in the first rate, and the first downlink rate being greater than a second downlink rate in the second rate.

Optionally, the method further includes:
transmitting a scheduling indication to the eLWA UE, the scheduling indication being used for indicating a first uplink rate in the first rate such that the eLWA UE transmits data to the LTE base station at the first uplink rate; or,
transmitting data to the eLWA UE at a first downlink rate in the first rate.

According to a third aspect of the embodiments of the present disclosure, there is provid ed a rate configuration device, applied in an enhanced long term evolution LTE-wireless local area network WLAN aggregation eLWA user equipment UE, the apparatus including:
a generation module configured to generate indication information for indicating a rate capability supported by the eLWA UE; and
a reporting module configured to report the indication information generated by the generation module to an LTE base station, the indication information being used for indicating a first rate of the eLWA UE, and the first rate being greater than a second rate configured by a WLAN access point AP for the eLWA UE.

Optionally, the reporting module is further configured to report the indication information to the LTE base station by adding the indication information to capability information of the eLWA UE.

In accordance to the present invention, the device further includes:
a transmission module configured to obtain the second rate configured by the WLAN AP for the eLWA UE and to transmit the second rate to the LTE base station.

Optionally, the indication information is an elwa-Parameters parameter for indicating that the eLWA UE supports simultaneous communication with the LTE base station and the WLAN AP.

Optionally, the indication information includes:
a ue-CategoryUL parameter and a first parameter value of the ue-CategoryUL parameter, the ue-CategoryUL parameter being used for indicating that the eLWA UE supports simultaneous transmission of data to the LTE base station and the WLAN AP, the first parameter value being corresponding to a first uplink rate in the first rate, and the first uplink rate being greater than a second uplink rate in the second rate; or,
a ue-CategoryDL parameter and a second parameter value of the ue-CategoryDL parameter, the ue-CategoryDL parameter being used for indicating that the eLWA UE supports simultaneous reception of data transmitted by the LTE base station and the WLAN AP, the second parameter value being corresponding to a first downlink rate in the first rate, and the first downlink rate being greater than a second downlink rate in the second rate.

Optionally, the device further includes:
a first transmission module configured to receive a scheduling indication transmitted by the LTE base station, to determine a first uplink rate in the first rate based on the scheduling in
   dication, and to transmit data to the base station at the first uplink rate; or,
a second transmission module configured to receive data transmitted by the LTE base station at a first downlink rate in the first rate.

According to a fourth aspect of the embodiments of the present disclosure, there is provided a rate configuration device, applied in a long term evolution LTE base station, the device including:
a first receiving module configured to receive indication information reported by an enhanced LTE-wireless local area network WLAN aggregation eLWA user equipment UE, the indication information being used for indicating a rate capability supported by the eLWA UE; and
a configuration module configured to configure a first rate for the eLWA UE according to the indication information received by the first receiving module, the first rate being greater than a second rate configured by a WLAN access point AP for the eLWA UE.

Optionally, the first receiving module is further configured to receive capability information reported by the eLWA UE and to read the indication information from the capability information.

In accordance to the present invention, the device further includes:
a second receiving module configured to receive the second rate transmitted by the eLWA UE; or,
an obtaining module configured to obtain the second rate from the WLAN AP.

Optionally, the indication information is an elwa-Parameters parameter for indicating that the eLWA UE supports simultaneous communication with the LTE base station and the WLAN AP.

Optionally, the indication information includes:
a ue-CategoryUL parameter and a first parameter value of the ue-CategoryUL parameter, the ue-CategoryUL parameter being used for indicating that the eLWA UE supports simultaneous transmission of data to the LTE base station and the WLAN AP, the first parameter value being corresponding to a first uplink rate in the first rate, and the first uplink rate being greater than a second uplink rate in the second rate; or,
a ue-CategoryDL parameter and a second parameter value of the ue-CategoryDL parameter, the ue-CategoryDL parameter being used for indicating that the eLWA UE supports simultaneous reception of data transmitted by the LTE base station and the WLAN AP, the second pa
   rameter value being corresponding to a first downlink rate in the first rate, and the first downlink rate being greater than a second downlink rate in the second rate.

Optionally, the device further includes:
a first transmission module configured to transmit a scheduling indication to the eLWA UE, the scheduling indication being used for indicating a first uplink rate in the first rate such that the eLWA UE transmits data to the LTE base station at the first uplink rate; or,
a second transmission module configured to transmit data to the eLWA UE at a first downlink rate in the first rate.

According to a fifth aspect of the embodiments of the present disclosure, there is provided a rate configuration device, applied in an enhanced long term evolution LTE-wireless local area network WLAN aggregation eLWA user equipment UE, the device including:
a processor; and
a memory for storing instructions executable by the processor;
wherein the processor is configured to:
generate indication information for indicating a rate capability supported by the eLWA UE; and
report the indication information to an LTE base station, the indication information being used for indicating a first rate of the eLWA UE, and the first rate being greater than a second rate configured by a WLAN access point AP for the eLWA UE.

The technical solutions provided by the embodiments of the present disclosure may elude the following beneficial effects.

The eLWA UE generates indication information indicating the rate capability supported by the eLWA UE and reports the indication information to the LTE base station, and the LTE base station can configure the first rate for the eLWA UE according to the indication information. Since the first rate is greater than a second rate configured by the WLAN AP for the eLWA UE, the eLWA UE may communicate with the WLAN AP at the second rate, and communicate with the LTE base station at a third rate obtained by subtracting the second rate from the first rate. In this way, the problem that the eLWA UE cannot communicate with the LTE base station and the WLAN AP at the same time when the first rate is lower than the second rate is solved, thus ensuring the load balancing between the LTE and the WLAN.

The eLWA UE may send the second rate to the LTE base station, or the LTE base station may obtain the second rate from the WLAN AP, thereby extending the acquisition manners of the second rate.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a block diagram of a rate configuration system involved in individual embodiments.
Fig. 2 is a flow chart of a rate configuration method according to an exemplary embodiment.
Fig. 3 is a flow chart of a rate configuration method according to another exemplary embodiment.
Fig. 4 is a block diagram of a rate configuration device according to an exemplary embodiment.
Fig. 5 is a block diagram of a rate configuration device according to an exemplary embodiment.
Fig. 6 is a block diagram of a rate configuration device according to an exemplary embodiment.
Fig. 7 is a block diagram of a rate configuration device according to an exemplary embodiment.
Fig. 8 is a block diagram of a device for rate configuration according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

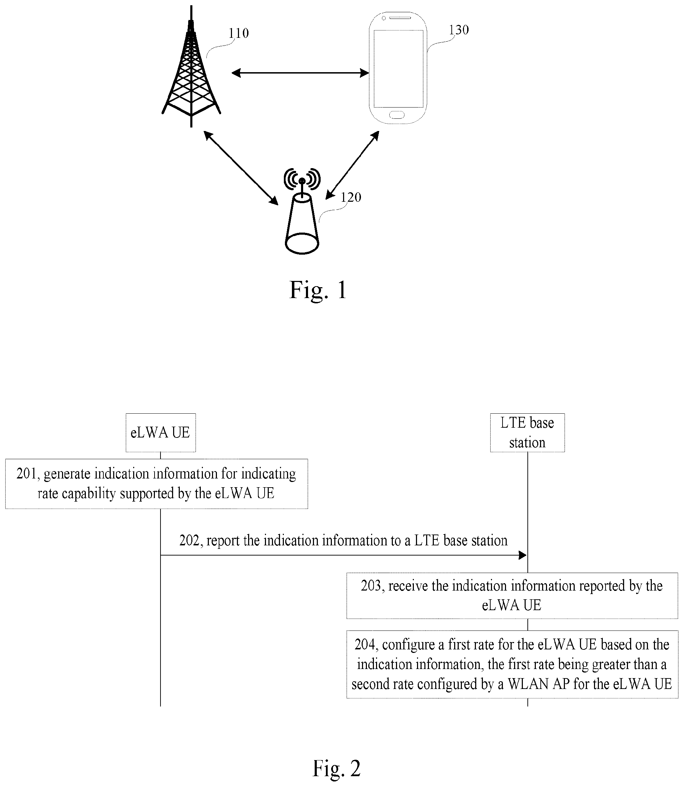

Fig. 1 illustrates a block diagram of a rate configuration system involved in individual embodiments of the present disclosure. The rate configuration system includes an LTE base station 110, a WLAN AP 120 and an eLWA UE 130. The eLWA UE 130 is connected to the WLAN AP 120 and the LTE base station 110, respectively, and a connection is established between the WLAN AP 120 and the LTE base station 110.

The eLWA UE 130 refers to a UE that supports an eLWA project.

The LTE base station 110 receives from the core network data to be sent to the eLWA UE 130, and decides which data is transmitted to the eLWA UE 130 via the LTE base station 110 and which data is transmitted to the eLWA UE 130 through the WLAN AP 120 according to a series of measurement results and pre-configurations. Therefore, the first rate configured by the LTE base station 110 for the eLWA UE 130 must be greater than the second rate configured by the WLAN AP 120 for the eLWA UE 130 so that the LTE base station 110 can send data to the WLAN AP 120 at the second rate and then the WLAN AP 120 sends the data to the eLWA UE130 at the second rate; and the LTE base station 110 transmits the remaining data to the eLWA UE130 at a third rate obtained by subtracting the second rate from the first rate, thereby ensuring that the eLWA UE130 can communicate with the LTE base station 110 and the WLAN AP 120 at the same time.

Fig. 2 is a flow chart of a rate configuration method in accordance with an exemplary embodiment, which is applied to a rate configuration system. As shown in Fig. 2, the rate configuration method includes the following steps.

In step 201, an eLWA UE generates indication information for indicating rate capability supported by the eLWA UE.

In step 202, the eLWA UE reports the indication information to a LTE base station.

In step 203, the LTE base station receives the indication information reported by the eLWA UE.

In step 204, the LTE base station configures a first rate for the eLWA UE based on the indication information, the first rate being greater than a second rate configured by a WLAN AP for the eLWA UE.

Herein, steps 201 and 202 may be implemented separately as an embodiment of the eLWA UE side, and steps 203 and 204 may be implemented separately as an embodiment of the LTE base station side.

In view of the above, through the rate configuration method provided by the present disclosure, the eLWA UE generates indication information indicating the rate capability supported by the eLWA UE and reports the indication information to the LTE base station, then the LTE base station may configure the first rate for the eLWA UE according to the indication information, and the first rate is greater than the second rate configured by the WLAN AP for the eLWA UE. Therefore, the eLWA UE may communicate with the WLAN AP at the second rate, and may communicate with the LTE base station at a third rate obtained by subtracting the second rate from the first rate, so as to solve the problem that the eLWA UE cannot communicate with the LTE base station and the WLAN AP at the same time when the first rate is lower than the second rate, thus ensuring the load balancing between the LTE and the WLAN.

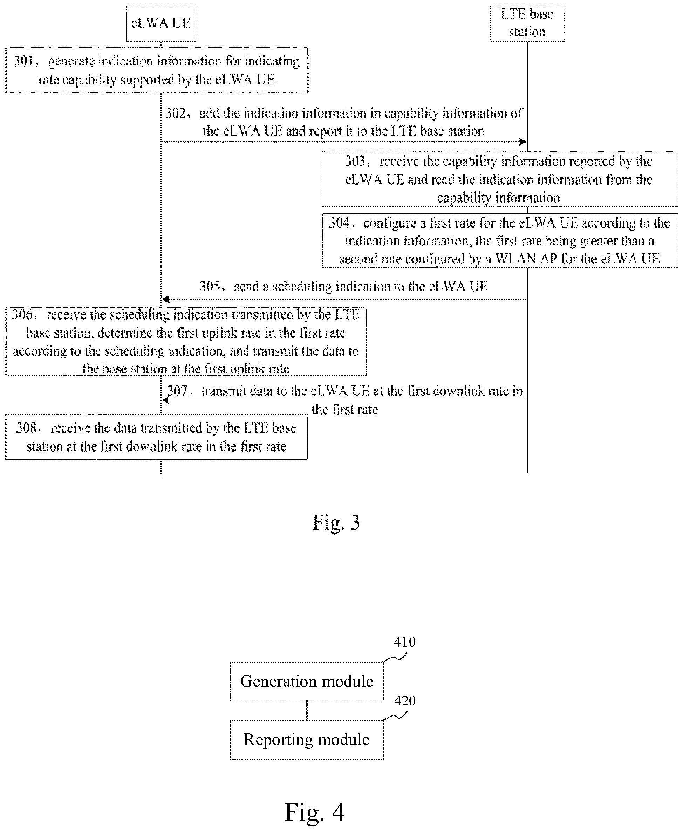

Fig. 3 is a flow chart of a rate configuration method according to another exemplary embodiment, which is applied in a rate configuration system. As shown in Fig. 3, the rate configuration method includes the following steps.

In step 301, an eLWA UE generates indication information for indicating rate capability supported by the eLWA UE.

In general, the rate configured by the WLAN AP for the eLWA UE is relatively high, typically at several Gbps, while the rate configured by the LTE base station for the eLWA UE is relatively low, only reaching a few hundred bps. Since all the data transmitted to the eLWA UE is scheduled by the LTE base station, that is, the LTE base station decides which data is transmitted to the eLWA UE through the LTE base station, and which data is transmitted to the eLWA UE through the WLAN AP, the sum of rates at which the LTE base station and the WLAN AP transmit data to the UE at the same time is several hundred bps configured by the LTE base station for the eLWA UE, and cannot meet the high rate requirements of the eLWA project. Therefore, the LTE base station needs to increase the rate configured for the eLWA UE.

Since the LTE base station does not know which UE is the eLWA UE and which UE is not the eLWA UE, the eLWA UE needs to report to the LTE base station the indication information indicating the rate capability supported by itself to enable the LTE base station to increase the rate configured for the eLWA UE.

The present embodiment provides two ways of realizing the indication information, and the following describes the two implementations.

In the first implementation, the indication information is an elwa-Parameters parameter, and the elwa-Parameters parameter is used to indicate that the eLWA UE supports simultaneous communication with the LTE base station and the WLAN AP. That is, when the UE sends the elwa-Parameters parameter to the LTE base station, it indicates that the UE is an eLWA UE, and simultaneous communication with the LTE base station and the WLAN AP is supported, i.e., the high rate is supported; and when the UE does not send the elwa-Parameters parameter to the LTE base station, it indicates that the UE is not the eLWA UE, and simultaneous communication with LTE base stations and WLAN AP is not supported, i.e., the high rate is not supported.

Alternatively, in the actual implementation, it is also possible to modify a name of the elwa-Parameters parameter. For example, a protocol version number is added to the name of the elwa-Parameters parameter. Assuming that the protocol version number is v14xy, then the elwa-Parameters parameter may also be elwa-Parameters-v14xy parameter; or, the name of the elwa-Parameters parameter is modified to a different name. The parameter name is not limited by the present embodiment.

In this implementation, the indication information is only used to indicate the rate capability supported by the eLWA UE and is not used to indicate the size of the first rate configured by the LTE base station for the eLWA UE, i.e., the rates configured by the LTE base station for all eLWA UEs are the default same first rate. In the present embodiment, the rate configured by the LTE base station for the eLWA UE is referred to as the first rate.

Since the first rate includes a first uplink rate and a first downlink rate, and the first uplink rate and the first downlink rate are different, when the first rate is the default rate, the first uplink rate and the first downlink rate are the default rates.

In the second implementation, the indication information includes: a ue-CategoryUL parameter and a first parameter value of the ue-CategoryUL parameter, the ue-CategoryUL parameter being used to indicate that the eLWA UE supports simultaneous transmission of data to the LTE base station and the WLAN AP, the first parameter value being corresponding to the first uplink rate in the first rate, and the first uplink rate being greater than the second uplink rate in the second rate; or a ue-CategoryDL parameter and a second parameter value of the ue-CategoryDL parameter, the ue-CategoryDL parameter being used to indicate that the eLWA UE supports simultaneous reception of data transmitted by the LTE base station and the WLAN AP, the second parameter value corresponding to the first downlink rate in the first rate, and the first downlink rate being greater than the second downlink rate in the second rate.

In this implementation, the indication information is used to indicate the size of the first rate configured by the LTE base station for the eLWA UE, i.e., the LTE base station needs to configure different first rates for different eLWA UEs according to the parameter values.

Since the first rate includes the first uplink rate and the first downlink rate and the first uplink rate and the first downlink rate are different, the eLWA UE needs to indicate the first uplink rate through the first parameter value, and indicate the first downlink rate through the second parameter value respectively. The first parameter value and the second parameter value are different.

Optionally, in actual implementations, it is also possible to modify the name of the ue-CategoryUL parameter. For example, a protocol version number is added to the name of the ue-CategoryUL parameter. Assuming that the protocol version number is v14xy, the ue-CategoryUL parameter may also be ue-CategoryUL-v14xy parameter; or, the name of the ue-CategoryUL parameter is modified to a different name. The parameter name is not limited by the present embodiment. Similarly, the ue-CategoryDL parameter may also be ue-CategoryDL-v14xy parameter; or, the name of the ue-CategoryDL parameter is modified to a different name. The parameter name is not limited by the present embodiment.

In step 302, the eLWA UE adds the indication information to capability information of the eLWA UE and reports it to the LTE base station.

The capability information is used to report all the capabilities supported by the eLWA UE to the LTE base station. Since the indication information is used for indicating at least the rate capability supported by the eLWA UE, the eLWA UE may add the indication information to the capability information to report it to the LTE base station.

Assuming that the capability information is UE-EUTRA-Capability IE, the protocol version number is v14xy, and the capability information also includes a laa-Parameters-v14xy parameter and a nonCriticalExtension parameter, the capability information for the first implementation is shown below:

```
  UE-EUTRA-Capability-v14xy -IEs ::= SEQUENCE {
 laa-Parameters-v14xy LAA-Parameters-v14xy OPTIONAL,
 elwa-Parameters-v14xy ELWA-Parameters-v14xy OPTIONAL,
 nonCriticalExtension SEQUENCE {} OPTIONAL
 }
```

In a possible implementation of the second implementation, the first parameter value and the second parameter value are both integers, then the first parameter value may be defined as INTEGER (x..y), the second parameter value may also be defined as INTEGER (x..y), and the first parameter value is different from the second parameter value. At this point, the capability information for the second implementation is shown below:

```
 UE-EUTRA-Capability-v14xy-IEs ::= SEQUENCE {
 ue-CategoryDL-v14xy INTEGER (x..y) OPTIONAL,
 ue-CategoryUL-v14xy INTEGER (x..y) OPTIONAL,
 laa-Parameters-v14xy LAA-Parameters-v14xy OPTIONAL,
 nonCriticalExtension SEQUENCE {} OPTIONAL
 }
```

Since attributes of the ue-CategoryDL-v14xy and ue-CategoryUL-v14xy parameters are OPTIONAL (optional), the capability information may only include the ue-CategoryDL-v14xy parameter, or only include the ue-CategoryUL-v14xy parameter, or include both the ue-CategoryDL-v14xy parameter and the ue-CategoryUL-v14xy parameter.

It should be noted that this embodiment only illustrates the capability information including the laa-Parameters-v14xy parameter and the nonCriticalExtension parameter. In actual implementations, the capability information may not include such information, or the capability information may include other information, which is not limited by the present embodiment.

In step 303, the LTE base station receives the capability information reported by the eLWA UE and reads the indication information from the capability information.

In step 304, the LTE base station configures a first rate for the eLWA UE according to the indication information, the first rate being greater than a second rate configured by a WLAN AP for the eLWA UE.

Before the LTE base station configures the first rate for the eLWA UE, it is also necessary to obtain the second rate that is configured by the WLAN AP for the eLWA UE. The present embodiment provides two implementations of acquiring the second rate by the LTE base station, and the two implementations are described below.

In a first implementation, the eLWA UE obtains a second rate configured by the WLAN AP for the eLWA UE, sends the second rate to the LTE base station, and the LTE base station receives the second rate sent by the eLWA UE.

After the eLWA UE has accessed to the WLAN AP and obtained the second rate configured by the WLAN AP for the eLWA UE, the eLWA UE may send the second rate directly to the LTE base station, and the LTE base station receives the second rate.

In a second implementation, the LTE base station obtains a second rate from the WLAN AP.

The LTE base station may also acquire the WLAN AP to which the eLWA UE accesses and directly obtain the second rate configured by the WLAN AP for the eLWA UE from the WLAN AP.

After acquiring the second rate, the LTE base station may configure for the eLWA UE a first rate greater than the second rate. When the first rate is too high, the third rate obtained by subtracting the second rate from the first rate is relatively large, and if the third rate is greater than the rate of several hundred bps configured by the LTE base station for the UE in the related art, when the LTE base station sends data to the eLWA UE at the third rate, too much data exceeds the processing power of the eLWA UE, and the eLWA UE will lose some of the data, resulting in packet loss. When the first rate is too low, the third rate obtained by subtracting the second rate from the first rate is relatively small, and if the third rate is less than the rate of several hundred bps configured by the LTE base station for the UE in the related art, when the LTE base station sends data to the eLWA UE at the third rate, too little data has not reached the maximum processing power of the eLWA UE, and the processing resources of the eLWA UE are not fully utilized, resulting in lower data transmission efficiency.

Thus, the LTE base station may also determine the first rate based on the second rate and the third rate. Alternatively, the LTE base station may determine the first rate as the sum of the second rate and the third rate, or a difference between the first rate and the sum is less than a preset threshold. The present embodiment is not limited thereto.

After the LTE base station configures the first rate for the eLWA UE, it is also necessary to notify the eLWA UE of the first rate. At this time, steps 305 or 307 are executed.

In step 305, the LTE base station sends a scheduling indication to the eLWA UE.

If the LTE base station does not need to transmit data to the eLWA UE currently, in order to make the eLWA UE transmit data at the first uplink rate, the LTE base station also needs to send a scheduling indication to the eLWA UE to indicate the first uplink rate.

In step 306, the eLWA UE receives the scheduling indication transmitted by the LTE base station, determines the first uplink rate in the first rate according to the scheduling indication, and transmits the data to the base station at the first uplink rate, and then the flow ends.

In step 307, the LTE base station transmits data to the eLWA UE at the first downlink rate in the first rate.

If the LTE base station needs to send data to the eLWA UE currently, the LTE base station sends data directly to the eLWA UE at the first downlink rate. That is, the sum of the rates at which the LTE base station and the WLAN AP transmit data to the UE at the same time is the first downlink rate.

In step 308, the eLWA UE receives the data transmitted by the LTE base station at the first downlink rate in the first rate.

The steps 301, 302, 306 and 308 may be implemented separately as an embodiment of the eLWA UE side, and steps 303, 304, 305 and 307 may be implemented separately as an embodiment of the LTE base station side.

In view of the above, through the rate configuration method provided by the present disclosure, the eLWA UE generates indication information indicating the rate capability supported by the eLWA UE and reports the indication information to the LTE base station by adding the indication information to the capability information of the eLWA UE, and then the LTE base station configures the first rate for the eLWA UE according to the indication information. Since the first rate is greater than the second rate configured by the WLAN AP for the eLWA UE, the eLWA UE may communicate with the WLAN AP at the second rate, and may communicate with the LTE base station at a third rate obtained by subtracting the second rate from the first rate, which solves the problem that the eLWA UE cannot communicate with the LTE base station and the WLAN AP at the same time when the first rate is lower than the second rate, thus ensuring the load balancing between the LTE and the WLAN.

The eLWA UE may send the second rate to the LTE base station, or the LTE base station may obtain the second rate from the WLAN AP, thereby extending the acquisition ways of the second rate.

Fig. 4 is a block diagram of a rate configuration device according to an exemplary embodiment. The rate configuration device is applied in an eLWA UE. As shown in Fig. 4, the rate configuration device includes a generation module 410 and a reporting module 420.

The generation module 410 is configured to generate indication information for indicating a rate capability supported by the eLWA UE.

The reporting module 420 is configured to report the indication information generated by the generation module 410 to an LTE base station, the indication information being used for indicating a first rate of the eLWA UE, and the first rate being greater than a second rate configured by a WLAN access point AP for the eLWA UE.

In view of the above, through the rate configuration device provided by the present disclosure, the eLWA UE generates indication information indicating the rate capability supported by the eLWA UE and reports the indication information to the LTE base station, then the LTE base station may configure the first rate for the eLWA UE according to the indication information, and the first rate is greater than the second rate configured by the WLAN AP for the eLWA UE. Therefore, the eLWA UE may communicate with the WLAN AP at the second rate, and may communicate with the LTE base station at a third rate obtained by subtracting the second rate from the first rate, so as to solve the problem that the eLWA UE cannot communicate with the LTE base station and the WLAN AP at the same time when the first rate is lower than the second rate, thus ensuring the load balancing between the LTE and the WLAN.

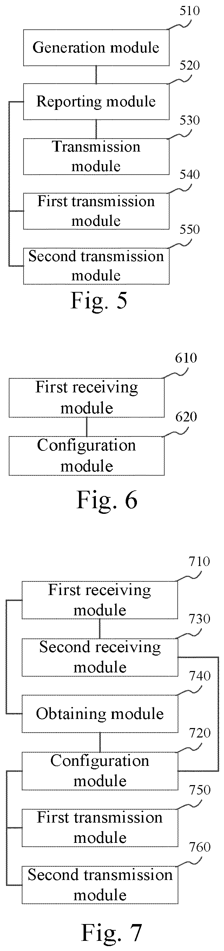

Fig. 5 is a block diagram of a rate configuration device according to an exemplary embodiment. The rate configuration device is applied in an eLWA UE. As shown in Fig. 5, the rate configuration device includes a generation module 510 and a reporting module 520.

The generation module 510 is configured to generate indication information for indicating a rate capability supported by the eLWA UE.

The reporting module 520 is configured to report the indication information generated by the generation module 510 to a LTE base station, the indication information being used for indicating a first rate of the eLWA UE, and the first rate being greater than a second rate configured by a WLAN access point AP for the eLWA UE.

Alternatively, the reporting module 520 is also configured to add the indication information into capability information of the eLWA UE so as to be reported to the LTE base station.

Optionally, the device further includes: a transmission module 530.

The transmission module 530 is configured to acquire the second rate configured by the WLAN AP for the eLWA UE and to transmit the second rate to the LTE base station.

Optionally, the indication information is an elwa-Parameters parameter, and the elwa-Parameters parameter is used to indicate that the eLWA UE supports simultaneous communication with the LTE base station and the WLAN AP.

Optionally, the indication information includes:
a ue-CategoryUL parameter and a first parameter value of the ue-CategoryUL parameter, the ue-CategoryUL parameter being used for indicating that the eLWA UE supports simultaneous transmission of data to the LTE base station and the WLAN AP, the first parameter value being corresponding to a first uplink rate in the first rate, and the first uplink rate being greater than a second uplink rate in the second rate; or,
a ue-CategoryDL parameter and a second parameter value of the ue-CategoryDL parameter, the ue-CategoryDL parameter being used for indicating that the eLWA UE supports simultaneous reception of data transmitted by the LTE base station and the WLAN AP, the second parameter value being corresponding to a first downlink rate in the first rate, and the first downlink rate being greater than a second downlink rate in the second rate.

Optionally, the device further includes: a first transmission module 540 or a second transmission module 550.

The first transmission module 540 is configured to receive a scheduling indication transmitted by the LTE base station, to determine a first uplink rate in the first rate according to the scheduling indication, and to transmit data to the base station at the first uplink rate.

Alternatively, the second transmission module 550 is configured to receive data transmitted by the LTE base station at the first downlink rate in the first rate.

In view of the above, through the rate configuration device provided by the present disclosure, the eLWA UE generates indication information indicating the rate capability supported by the eLWA UE and reports the indication information to the LTE base station, then the LTE base station may configure the first rate for the eLWA UE according to the indication information, and the first rate is greater than the second rate configured by the WLAN AP for the eLWA UE. Therefore, the eLWA UE may communicate with the WLAN AP at the second rate, and may communicate with the LTE base station at a third rate obtained by subtracting the second rate from the first rate, so as to solve the problem that the eLWA UE cannot communicate with the LTE base station and the WLAN AP at the same time when the first rate is lower than the second rate, thus ensuring the load balancing between the LTE and the WLAN.

The eLWA UE may send the second rate to the LTE base station, or the LTE base station may obtain the second rate from the WLAN AP, thereby extending the acquisition ways of the second rate.

Fig. 6 is a block diagram of a rate configuration device according to an exemplary embodiment, which is applied in an LTE base station. As shown in Fig. 6, the rate configuration device includes: a first receiving module 610 and a configuration module 620.

The first receiving module 610 is configured to receive indication information reported by an eLWA UE, the indication information indicating a rate capability supported by the eLWA UE.

The configuration module 620 is configured to configure a first rate for the eLWA UE based on the indication information received by the first receiving module 610, the first rate being greater than a second rate configured by the WLAN AP for the eLWA UE.

In view of the above, through the rate configuration device provided by the present disclosure, the eLWA UE generates indication information indicating the rate capability supported by the eLWA UE and reports the indication information to the LTE base station, then the LTE base station may configure the first rate for the eLWA UE according to the indication information, and the first rate is greater than the second rate configured by the WLAN AP for the eLWA UE. Therefore, the eLWA UE may communicate with the WLAN AP at the second rate, and may communicate with the LTE base station at a third rate obtained by subtracting the second rate from the first rate, so as to solve the problem that the eLWA UE cannot communicate with the LTE base station and the WLAN AP at the same time when the first rate is lower than the second rate, thus ensuring the load balancing between the LTE and the WLAN.

Fig. 7 is a block diagram of a rate configuration device according to an exemplary embodiment. The rate configuration device is applied in an LTE base station. As shown in Fig. 7, the rate configuration device includes a first receiving module 710 and a configuration module 720.

The first receiving module 710 is configured to receive indication information reported by an eLWA UE, the indication information indicating a rate capability supported by the eLWA UE.

The configuration module 720 is configured to configure a first rate for the eLWA UE based on the indication information received by the first receiving module 710, the first rate being greater than a second rate configured by the WLAN AP for the eLWA UE.

Optionally, the first receiving module 710 is further configured to receive capability information reported by the eLWA UE and read the indication information from the capability information.

Optionally, the device further includes: a second receiving module 730 or an obtaining module 740.

The second receiving module 730 is configured to receive a second rate transmitted by the eLWA UE.

Alternatively, the obtaining module 740 is configured to acquire a second rate from the WLAN AP.

Optionally, the indication information is an elwa-Parameters parameter, and the elwa-Parameters parameter is used to indicate that the eLWA UE supports simultaneous communication with the LTE base station and the WLAN AP.

Optionally, the indication information includes:
a ue-CategoryUL parameter and a first parameter value of the ue-CategoryUL parameter, the ue-CategoryUL parameter being used for indicating that the eLWA UE supports simultaneous transmission of data to the LTE base station and the WLAN AP, the first parameter value being corresponding to a first uplink rate in the first rate, and the first uplink rate being greater than a second uplink rate in the second rate; or,
a ue-CategoryDL parameter and a second parameter value of the ue-CategoryDL parameter, the ue-CategoryDL parameter being used for indicating that the eLWA UE supports simultaneous reception of data transmitted by the LTE base station and the WLAN AP, the second parameter value being corresponding to a first downlink rate in the first rate, and the first downlink rate being greater than a second downlink rate in the second rate.

Optionally, the device further includes: a first transmission module 750 or a second transmission module 760.

The first transmission module 750 is configured to send a scheduling indication to the eLWA UE, the scheduling indication indicating a first uplink rate in the first rate such that the eLWA UE transmits data to the LTE base station at the first uplink rate.

Alternatively, the second transmission module 760 is configured to transmit data to the eLWA UE at a first downlink rate in the first rate.

In view of the above, through the rate configuration device provided by the present disclosure, the eLWA UE generates indication information indicating the rate capability supported by the eLWA UE and reports the indication information to the LTE base station, then the LTE base station may configure the first rate for the eLWA UE according to the indication information, and the first rate is greater than the second rate configured by the WLAN AP for the eLWA UE. Therefore, the eLWA UE may communicate with the WLAN AP at the second rate, and may communicate with the LTE base station at a third rate obtained by subtracting the second rate from the first rate, so as to solve the problem that the eLWA UE cannot communicate with the LTE base station and the WLAN AP at the same time when the first rate is lower than the second rate, thus ensuring the load balancing between the LTE and the WLAN.

The eLWA UE may send a second rate to the LTE base station, or the LTE base station may obtain a second rate from the WLAN AP, thereby extending the acquisition of the second rate.

With respect to the devices in the above embodiments, the specific mode in which each module performs the operation has been described in detail in the embodiments relating to the method, and the description thereof will not be described in detail herein.

An exemplary embodiment of the present disclosure provides a rate configuration device applied in an eLWA UE for implementing the rate configuration method provided by the present disclosure. The rate configuration device includes: a processor; and a memory for storing instructions executable by the processor;
wherein the processor is configured to:
generate indication information for indicating a rate capability supported by the eLWA UE; and
report the indication information to an LTE base station, the indication information being used for indicating a first rate of the eLWA UE, and the first rate being greater than a second rate configured by a WLAN access point AP for the eLWA UE

An exemplary embodiment of the present disclosure provides a rate configuration device applied in a LTE base station for implementing the rate configuration method provided by the present disclosure. The rate configuration device includes: a processor; and a memory for storing instructions executable by the processor;
wherein the processor is configured to:
receive indication information reported by an enhanced LTE-wireless local area network WLAN aggregation eLWA user equipment UE, the indication information being used for indicating a rate capability supported by the eLWA UE; and
configure a first rate for the eLWA UE according to the indication information, the first rate being greater than a second rate configured by a WLAN access point AP for the eLWA UE.

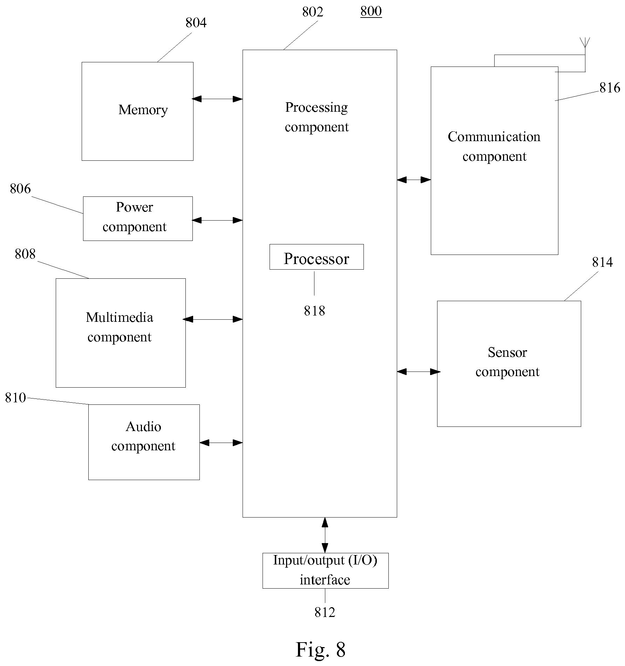

Fig. 8 is a block diagram of a device for rate configuration provided by an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 818 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 804 including instructions, the above instructions are executable by the processor 818 in the device 800, for performing the above-described methods. For example, the non-transitory computer-readable storage medium may be a ROM, a RAM, a CD-ROM, a magnetic tape, a floppy disc, an optical data storage device, and the like.

## Claims

1. A rate configuration method, applied in an enhanced long term evolution LTE-wireless local area network WLAN aggregation eLWA user equipment UE, the method comprising:
generating (201, 301) at the eLWA UE indication information for indicating a rate capability supported by the eLWA UE; reporting (202) by the eLWA the indication information to an LTE base station; and
the indication information is being used by the LTE base station for indicating a first rate to the eLWA UE, the method further comprises:
obtaining a second rate configured by a WLAN access point, WLAN AP, for the eLWA UE, and transmitting the second rate to the LTE base station,
wherein the first rate is configured to be greater than the second rate configured by the WLAN AP for the eLWA UE, and the eLWA UE is adapted to communicate at the same time with the LTE base station at a rate obtained by subtracting the second rate from the first rate and with the WLAN AP at the second rate in order to ensure load balancing between the LTE base station and the WLAN AP.

2. The method according to claim 1, wherein the reporting the indication information to the LTE base station, comprises:
reporting (302) the indication information to the LTE base station by adding the indication information to capability information of the eLWA UE.

3. The method according to any one of claims 1 to 2, wherein the indication information
comprises an eLWA parameter for indicating that the eLWA UE supports simultaneous communication with the LTE base station and the WLAN AP.

4. The method according to any one of claims 1 to 2, wherein the indication information comprises:
a ue-CategoryUL parameter and a first parameter value of the ue-CategoryUL parameter, the ue-CategoryUL parameter being used for indicating that the eLWA UE supports simultaneous transmission of data to the LTE base station and the WLAN AP, the first parameter value being corresponding to a first uplink rate in the first rate, and the first uplink rate being greater than a second uplink rate in the second rate; or,
a ue-CategoryDL parameter and a second parameter value of the ue-CategoryDL parameter, the ue-CategoryDL parameter being used for indicating that the eLWA UE supports simultaneous reception of data transmitted by the LTE base station and the WLAN AP, the second parameter value being corresponding to a first downlink rate in the first rate, and the first downlink rate being greater than a second downlink rate in the second rate.

5. The method according to claim 1, further comprising:
receiving (306) a scheduling indication transmitted by the LTE base station, determining a first uplink rate in the first rate based on the scheduling indication, and transmitting data to the base station at the first uplink rate; or,
receiving (308) data transmitted by the LTE base station at a first downlink rate in the first rate.

6. A rate configuration method, applied in a long term evolution LTE base station, the method comprising:
receiving (203) indication information reported by an enhanced LTE-wireless local area network WLAN aggregation eLWA user equipment UE, the indication information being used for indicating a rate capability supported by the eLWA UE; receiving the second rate transmitted by the eLWA UE; or,
obtaining the second rate from the WLAN AP; and
configuring (204, 304) a first rate for the eLWA UE according to the indication information, after receiving or obtaining the second rate, the first rate being greater than the second rate configured by a WLAN access point AP for the eLWA UE, so as to allow the eLWA UE to communicate with the LTE base station at a rate obtained by subtracting the second rate from the first rate.

7. The method according to claim 6, wherein the receiving (203) the indication information reported by the enhanced LTE-wireless local area network WLAN aggregation eLWA user equipment UE, comprises:
receiving capability information reported by the eLWA UE, and reading the indication information from the capability information (303).

8. The method according to any one of claims 6 to 7, wherein the indication information is an eLWA parameter for indicating that the eLWA UE supports simultaneous communication with the LTE base station and the WLAN AP.

9. The method according to any one of claims 6 to 7, wherein the indication information comprises:
a ue-CategoryUL parameter and a first parameter value of the ue-CategoryUL parameter, the ue-CategoryUL parameter being used for indicating that the eLWA UE supports simultaneous transmission of data to the LTE base station and the WLAN AP, the first parameter value being corresponding to a first uplink rate in the first rate, and the first uplink rate being greater than a second uplink rate in the second rate; or,
a ue-CategoryDL parameter and a second parameter value of the ue-CategoryDL parameter, the ue-CategoryDL parameter being used for indicating that the eLWA UE supports simultaneous reception of data transmitted by the LTE base station and the WLAN AP, the second parameter value being corresponding to a first downlink rate in the first rate, and the first downlink rate being greater than a second downlink rate in the second rate.

10. The method according to claim 6, further comprising:
transmitting (305) a scheduling indication to the eLWA UE, the scheduling indication being used for indicating a first uplink rate in the first rate such that the eLWA UE transmits data to the LTE base station at the first uplink rate; or,
transmitting (307) data to the eLWA UE at a first downlink rate in the first rate.

11. A rate configuration device, applied in an enhanced long term evolution LTE-wireless local area network WLAN aggregation eLWA user equipment UE, the apparatus comprising:
a generation module (410, 510) configured to generate indication information for indicating a rate capability supported by the eLWA UE; and
a reporting module (420, 520) configured to report the indication information generated by the generation module (410, 510) to an LTE base station, wherein the indication information is being used for indicating a first rate of the eLWA UE the device further comprises:
a transmission module (530) is configured to obtain a second rate configured by a WLAN access point, WLAN AP, for the eLWA UE and to transmit the second rate to the LTE base station, and wherein
the first rate is configured to be greater than a second rate configured by a WLAN AP for the eLWA UE, and the eLWA UE is adapted to communicate at the same time with the LTE base station at a rate obtained by subtracting the second rate from the first rate and with the WLAN AP at the second rate in order to ensure load balancing between the LTE base station and the WLAN AP.

12. The device according to claim 11, wherein the reporting module (420) is further configured to report the indication information to the LTE base station by adding the indication information to capability information of the eLWA UE.

13. The device according to any one of claims 11 to 12, wherein the indication information is an eLWA parameter for indicating that the eLWA UE supports simultaneous communication with the LTE base station and the WLAN AP.

14. The device according to any one of claims 11 to 12, wherein the indication information comprises:
a ue-CategoryUL parameter and a first parameter value of the ue-CategoryUL parameter, the ue-CategoryUL parameter being used for indicating that the eLWA UE supports simultaneous transmission of data to the LTE base station and the WLAN AP, the first parameter value being corresponding to a first uplink rate in the first rate, and the first uplink rate being greater than a second uplink rate in the second rate; or,
a ue-CategoryDL parameter and a second parameter value of the ue-CategoryDL parameter, the ue-CategoryDL parameter being used for indicating that the eLWA UE supports simultaneous reception of data transmitted by the LTE base station and the WLAN AP, the second parameter value being corresponding to a first downlink rate in the first rate, and the first downlink rate being greater than a second downlink rate in the second rate.

15. The device according to claim 11, further comprising:
a first transmission module (540) configured to receive a scheduling indication transmitted by the LTE base station, to determine a first uplink rate in the first rate based on the scheduling indication, and to transmit data to the base station at the first uplink rate; or,
a second transmission module (550) configured to receive data transmitted by the LTE base station at a first downlink rate in the first rate.

16. A rate configuration device, applied in a long term evolution LTE base station, the device comprising:
a first receiving module (610, 710) configured to receive indication information reported by an enhanced LTE-wireless local area network WLAN aggregation eLWA user equipment UE, the indication information being used for indicating a rate capability supported by the eLWA UE; a second receiving module (730) configured to receive a second rate transmitted by the eLWA UE; or,
an obtaining module (740) configured to obtain the second rate from a WLAN AP
a configuration module (620, 720) configured to configure a first rate for the eLWA UE according to the indication information received by the first receiving module, after receiving or obtaining the second rate, wherein the first rate being greater than a second rate configured by a WLAN access point AP for the eLWA UE, so as to allow the eLWA UE to communicate with the LTE base station at a rate obtained by subtracting the second rate from the first rate.

17. The device according to claim 16, wherein the first receiving module (610, 710) is further configured to receive capability information reported by the eLWA UE and to read the indication information from the capability information.

18. The device according to any one of claims 16 to 17, wherein the indication information is an elwa-Parameters parameter for indicating that the eLWA UE supports simultaneous communication with the LTE base station and the WLAN AP.

19. The device according to any one of claims 16 to 17, wherein the indication information comprises:
a ue-CategoryUL parameter and a first parameter value of the ue-CategoryUL parameter, the ue-CategoryUL parameter being used for indicating that the eLWA UE supports simultaneous transmission of data to the LTE base station and the WLAN AP, the first parameter value being corresponding to a first uplink rate in the first rate, and the first uplink rate being greater than a second uplink rate in the second rate; or,
a ue-CategoryDL parameter and a second parameter value of the ue-CategoryDL parameter, the ue-CategoryDL parameter being used for indicating that the eLWA UE supports simultaneous reception of data transmitted by the LTE base station and the WLAN AP, the second parameter value being corresponding to a first downlink rate in the first rate, and the first downlink rate being greater than a second downlink rate in the second rate.

20. The device according to claim 16, further comprising:
a first transmission module (750) configured to transmit a scheduling indication to the eLWA UE, the scheduling indication being used for indicating a first uplink rate in the first rate such that the eLWA UE transmits data to the LTE base station at the first uplink rate; or,
a second transmission module (760) configured to transmit data to the eLWA UE at a first downlink rate in the first rate.

21. A computation device, adapted to be used in an enhanced long term evolution LTE-wireless local area network WLAN aggregation system, the device comprising:
a processor (818); and
a memory (804) for storing instructions executable by the processor (818);
wherein the processor (818) is configured to execute the stored instructions to perform the method according to any of claims 1-10.

## Patentansprüche

1. Ratenkonfigurationsverfahren, das in einem erweiterten Long-Term-Evolution-,LTE,-Wireless-Local-Area-Network-,WLAN,-Aggregations-,eLWA,-Benut-zerendgerät, UE angewendet wird, wobei das Verfahren umfasst:
Erzeugen (201, 301) an dem eLWA-UE einer Angabeinformation zum Angeben einer durch das eLAWA-UE unterstützten Ratenleistung;
Melden (202) der Angabeinformation an eine LTE-Basisstation durch die eL-WA; und
wobei die Angabeinformation von der LTE-Basisstation verwendet wird, um dem eLWA-UE eine erste Rate anzugeben,
wobei das Verfahren ferner umfasst:
Erhalten einer zweiten Rate, die durch einen WLAN Access Point, WLAN AP, für das eLWA-UE konfiguriert wird, und übertragen der zweiten Rate an die LTE-Basisstation,
wobei die erste Rate derart konfiguriert ist, dass sie größer ist als die durch den WLAN AP für das eLWA-UE konfigurierte zweite Rate, und wobei das eL-WA-UE vorgesehen ist, um gleichzeitig mit der LTE-Basisstation bei einer Rate, die durch Subtrahieren der zweiten Rate von der ersten Rate erzielt wird, und mit dem WLAN AP bei der zweiten Rate zu kommunizieren, um einen Lastausgleich zwischen der LTE-Basisstation und dem WLAN AP sicherzustellen.

2. Verfahren nach Anspruch 1, wobei das Melden der Angabeinformation an die LTE-Basisstation umfasst:
Melden (302) der Angabeinformation an die LTE-Basisstation durch Addieren der Angabeinformation zu der Leistungsinformation des eLWA-UE.

3. Verfahren nach einem der Ansprüche 1 bis 2, wobei die Angabeinformation einen eLWA-Parameter aufweist, um anzugeben, dass das eLWA-UE eine gleichzeitige Kommunikation mit der LTE-Basisstation und dem WLAN AP unterstützt.

4. Verfahren nach einem der Ansprüche 1 oder 2, wobei die Angabeinformation aufweist:
einen ue-CategoryUL-Parameter und einen ersten Parameterwert des ue-CategoryUL-Parameters, wobei der ue-CategoryUL-Parameter verwendet wird, um anzugeben, dass das eLWA-UE eine gleichzeitige Übertragung von Daten an die LTE-Basisstation und den WLAN AP unterstützt, wobei der erste Parameterwert einer erste Uplink-Rate in der ersten Rate entspricht und die erste Uplink-Rater größer ist als die zweite Uplink-Rate in der zweiten Rate; oder
einen ue-CategoryDL-Parameter und einen zweiten Parameterwert des ue-CategoryDL-Parameters, wobei der ue-CategoryDL-Parameter verwendet wird, um anzugeben, dass das eLWA-UE einen gleichzeitigen Empfangen von durch die LTE-Basisstation und den WLAN AP übertragenen Daten unterstützt, wobei der zweite Parameterwert einer ersten Downlink-Rate in der ersten Rate entspricht und die erste Downlink-Rate größer ist als die zweite Downlink-Rate in der zweiten Rate.

5. Verfahren nach Anspruch 1, das ferner umfasst:
Empfangen (306) einer durch die LTE-Basisstation übertragene Terminierungsangabe, Bestimmen einer ersten Uplink-Rate in der ersten Rate, basierend auf der Terminierungsangabe, und Übertragen von Daten an die Basisstation bei der ersten Uplink-Rate; oder
Empfangen (308) von Daten, die durch die LTE-Basisstation bei einer ersten Downlink-Rate in der ersten Rate übertragen wurden.

6. Ratenkonfigurationsverfahren, das in einer Long-Term-Evolution-,LTE,-Basisstation angewendet wird, wobei das Verfahren umfasst:
Empfangen (203) einer Angabeinformation, die durch ein erweitertes Wireless-Local-Area-Network-,WLAN,-Aggregations-,eLWA,-Benutzerendgerät, UE gemeldet wird, wobei die Angabeinformation zum Angeben einer durch das eLWA-UE unterstützten Ratenleistung verwendet wird; Empfangen der von dem eLWA-EU übertragenen zweiten Rate; oder
Erhalten der zweiten Rate von dem WLAN AP; und
Konfigurieren (204, 304) einer ersten Rate für das eLWA-UE gemäß der Angabeinformation, nach Empfangen oder Erhalten der zweiten Rate, wobei die erste Rate größer ist als die durch einen WLAN Access Point, WLAN AP, für das eLWA-UE konfigurierte zweite Rate, so dass dem eLWA-UE ermöglicht wird, mit der LTE-Basisstation zu kommunizieren, bei einer Rate, die durch Subtrahieren der zweiten Rate von der ersten Rate erzielt wird.

7. Verfahren nach Anspruch 6, wobei das Empfangen (203) der Angabeinformation, die durch ein erweitertes LTE-Wireless-Local-Area-Network-,WLAN,-Aggregations-,eLWA,-Benutzeredgerät, UE gemeldet wird, umfasst:
Empfangen einer durch das eLWA-UE gemeldeten Leistungsinformation und Lesen der Angabeinformation aus der Leistungsinformation (303).

8. Verfahren nach einem der Ansprüche 6 bis 7, wobei die Angabeinformation ein eLWA-Parameter ist, um anzugeben, dass das eLWA-UE eine gleichzeitige Kommunikation mit der LTE-Basisstation und dem WLAN AP unterstützt.

9. Verfahren nach einem der Ansprüche 6 bis 7, wobei die Angabeinformation aufweist:
einen ue-CategoryUL-Parameter und einen ersten Parameterwert des ue-CategoryUL-Parameters, wobei der ue-CategoryUL-Parameter verwendet wird, um anzugeben, dass das eLWA-UE eine gleichzeitige Übertragung von Daten an die LTE-Basisstation und den WLAN AP unterstützt, wobei der erste Parameterwert einer ersten Uplink-Rate in der ersten Rate entspricht und die erste Uplink-Rate größer ist als eine zweite Uplink-Rate in der zweiten Rate; oder
einen ue-CategoryDL-Parameter und einen zweiten Parameterwert des ue-CategoryDL-Parameters, wobei der ue-CategoryDL-Parameter verwendet wird, um anzugeben, dass das eLWA-UE einen gleichzeitigen Empfang von durch die LTE-Basisstation und den WLAN AP übertragenen Daten unterstützt, wobei der zweite Parameterwert einer ersten Downlink-Rate in der ersten Rate entspricht und die erste Downlink-Rate größer ist als die zweite Downlink-Rate in der zweiten Rate.

10. Verfahren nach Anspruch 6, das ferner umfasst:
Übertragen (305) einer Terminierungsangabe an das eLWA-UE, wobei die Terminierungsangabe zum Angeben einer ersten Uplink-Rate in der ersten Rate verwendet wird, so dass das eLWA-UE Daten an die LTE-Basisstation bei der ersten Uplink-Rate überträgt; oder
Übertragen (307) von Daten an das eLWA-UE bei einer ersten Downlink-Rate in der ersten Rate.

11. Ratenkonfigurationsvorrichtung, die in einem erweiterten Long-Term-Evolution-,LTE,-Wireless-Local-Area-Network-,WLAN,-Aggregations-,eLWA,-Benutzerendgerät, UE angewendet wird, wobei die Vorrichtung aufweist:
ein Erzeugungsmodul (410, 510), das zum Erzeugen einer Angabeinformation konfiguriert ist, um eine von dem eLWA-UE unterstützte Ratenleistung anzugeben; und
eine Meldemodul (420, 520), das zum Melden der von dem Erzeugungsmodul (410, 510) erzeugten Angabeinformation an eine LTE-Basisstation konfiguriert ist, wobei die Angabeinformation zum Angeben einer ersten Rate des eLWA-UE verwendet wird,
wobei die Vorrichtung ferner aufweist:
ein Übertragungsmodul (530), das zum Erhalten einer von einem WLAN Access Point, WLAN AP, konfigurierten zweiten Raten für das eLWA-UE konfiguriert ist und zum Übertragen der zweiten Rate an die LTE-Basisstation, und wobei die erste Rate derart konfiguriert ist, dass sie größer ist als die von einem WLAN AP für das eLWA-UE konfigurierte zweite Rate, und wobei das eL-WA-UE vorgesehen ist, um gleichzeitig mit der LTE-Basisstation bei einer Rate, die durch Subtrahieren der zweiten Rate von der ersten Rate erzielt wird, und mit dem WLAN AP bei der zweiten Rate zu kommunizieren, um einen Lastausgleich zwischen der LTE-Basisstation und dem WLAN AP sicherzustellen.

12. Vorrichtung nach Anspruch 11, wobei das Meldemodul (420) ferner konfiguriert ist, um die Angabeinformation an die LTE-Basisstation zu melden, durch Addieren der Angabeinformation zu der Leistungsinformation des eLWA-UE.

13. Vorrichtung nach einem der Ansprüche 11 bis 12, wobei die Angabeinformation ein eLWA-Parameter ist, um abzugeben, dass das eLWA-UE eine gleichzeitige Kommunikation mit der LTE-Basisstation und dem WLAN AP unterstützt.

14. Vorrichtung nach einem der Ansprüche 11 bis 12, wobei die Angabeinformation aufweist:
einen ue-CategoryUL-Parameter und einen ersten Parameterwert des ue-CategoryUL-Parameters, wobei der ue-CategoryUL-Parameter verwendet wird, um anzugeben, dass das eLWA-UE eine gleichzeitige Übertragung von Daten an die LTE-Basisstation und den WLAN AP unterstützt, wobei der erste Parameterwert einer ersten Uplink-Rate in der ersten Rate entspricht und die erste Uplink-Rate größer ist als eine zweite Uplink-Rate in der zweiten Rate; oder
einen ue-CategoryDL-Parameter und einen zweiten Parameterwert des ue-CategoryDL-Parameters, wobei der ue-CategoryDL-Parameter verwendet wird, um anzugeben, dass das eLWA-UE einen gleichzeitigen Empfang von durch die LTE-Basisstation und den WLAN AP übertragenen Daten unterstützt, wobei der zweite Parameterwert einer ersten Downlink-Rate in der ersten Rate entspricht und die erste Downlink-Rate größer ist als die zweite Downlink-Rate in der zweiten Rate.

15. Vorrichtung nach Anspruch 11, die ferner aufweist:
ein erstes Übertragungsmodul (540), das zum Empfangen einer durch die LTE-Basisstation übertragenen Terminierungsangabe konfiguriert ist, um eine erste Uplink-Rate in der ersten Rate basierend auf der Terminierungsangabe zu bestimmen und Daten an die Basisstation bei der ersten Uplink-Rate zu übertragen; oder
ein zweites Übertragungsmodul (550), das zum Empfangen von durch die LTE-Basisstation bei einer ersten Downlink-Rate in der ersten Rate übertragenen Daten konfiguriert ist.

16. Ratenkonfigurationsvorrichtung, die in einer Long-Term-Evolution-,LTE,-Basisstation verwendet wird, wobei die Vorrichtung aufweist:
ein erstes Empfangsmodul (610, 710), das zum Empfangen von Angabeinformationen, die durch ein erweitertes LTE-Wireless-Local-Area-Network-,WLAN,-Aggregations-,eLWA,-Benutzerendgerät, UE gemeldet werden, konfiguriert ist, wobei die Angabeinformation zum Angeben einer durch das eL-WA-UE unterstützten Ratenleistung verwendet wird; ein zweites Empfangsmodul (730), das zum Empfangen einer durch das eLWA-EU übertragenen zweiten Rate konfiguriert ist; oder
ein Erhaltmodul (740), das zum Erhalten der zweiten Rate von einem WLAN AP konfiguriert ist;
ein Konfigurationsmodul (620, 720), das zum Konfigurieren einer ersten Rate für das eLWA-UE konfiguriert ist, gemäß der von dem Empfangsmodul empfangenen Angabeinformation, nach Empfangen oder Erhalten der zweiten Rate, wobei die erste Rate größer ist als eine durch einen WLAN Access Point, WLAN AP, für das eLWA-UE konfigurierte zweite Rate, so dass dem eLEWA-UE ermöglicht wird, mit der LTE-Basisstation zu kommunizieren, bei einer Rate, die durch Subtrahieren der zweiten Rate von der ersten Rate erhalten wird.

17. Vorrichtung nach Anspruch 16, wobei das erste Empfangsmodul (610, 710) ferner zum Empfangen einer von dem eLWA-UE gemeldeten Leistungsinformation und zum Lesen der Angabeinformation aus der Leistungsinformation konfiguriert ist.

18. Vorrichtung nach einem der Ansprüche 16 bis 17, wobei die Angabeinformation ein eLWA-Parameter ist, um anzugeben, dass das eLWA-UE eine gleichzeitige Kommunikation mit der LTE-Basisstation und dem WLAN AP unterstützt.

19. Vorrichtung nach einem der Ansprüche 16 bis 17, wobei die Angabeinformation aufweist:
einen ue-CategoryUL-Parameter und einen ersten Parameterwert des ue-CategoryUL-Parameters, wobei der ue-CategoryUL-Parameter verwendet wird, um anzugeben, dass das eLWA-UE eine gleichzeitige Übertragung von Daten an die LTE-Basisstation und dem WLAN AP unterstützt, wobei der erste Parameterwert einer ersten Uplink-Rate in der ersten Rate entspricht und die erste Uplink-Rate größer ist als eine zweite Uplink-Rate in der zweiten Rate; oder
einen ue-CategoryDL-Parameter und einen zweiten Parameterwert des ue-CategoryDL-Parameters, wobei der ue-CategoryDL-Parameter verwendet wird, um anzugeben, dass das eLWA-UE einen gleichzeitigen Empfang von durch die LTE-Basisstation und den WLAN AP übertragenen Daten unterstützt, wobei der zweite Parameterwert einer ersten Downlink-Rate in der ersten Rate entspricht und die erste Downlink-Rate größer ist als die zweite Downlink-Rate in der zweiten Rate.

20. Vorrichtung nach Anspruch 16, die ferner aufweist:
ein erstes Übertragungsmodul (750), das zum Übertragen einer Terminierungsangabe an das eLWA-UE konfiguriert ist, wobei die Terminierungsangabe zum Angeben einer ersten Uplink-Rate in der ersten Rate verwendet wird, so dass das eLWA-UE Daten an die LTE-Basisstation bei der ersten Uplink-Rate überträgt; oder
ein zweites Übertragungsmodul (760), das zum Übertragen von Daten an das eLWA-UE bei einer ersten Downlink-Rate in der ersten Rate konfiguriert ist.

21. Berechnungsvorrichtung, die dafür vorgesehen ist, in einem erweiterten Long-Term-Evolution-,LTW,-Wire-Local-Area-Network-,WLAN,-Aggregationssystem verwendet zu werden, wobei die Vorrichtung aufweist:
einen Prozessor (818); und
einen Speicher (804) zum Speichern von durch den Prozessor (818) ausführbaren Anweisungen;
wobei der Prozessor (818) zum Ausführen der gespeicherten Anweisungen konfiguriert ist, um das Verfahren nach einem der Ansprüche 1-10 durchzuführen.

## Revendications

1. Procédé de configuration de débit, appliqué dans un équipement d'utilisateur, UE, eLWA d'agrégation de réseau local sans fil, WLAN, à évolution à long terme, LTE, améliorée, le procédé comprenant le fait de:
générer (201, 301) à l'UE eLWA des informations d'indication destinées à indiquer une capacité de débit supportée par l'UE eLWA; rapporter (202) par l'eLWA les informations d'indication à une station de base à LTE; et
les informations d'indication sont utilisées par la station de base à LTE pour indiquer un premier débit à l'UE eLWA,
le procédé comprenant par ailleurs le fait de:
obtenir un deuxième débit configuré par un point d'accès de WLAN, WLAN AP, pour l'UE eLWA et transmettre le deuxième débit à la station de base à LTE,
dans lequel le premier débit est configuré de manière à être supérieur au deuxième débit configuré par le WLAN AP pour l'UE eLWA, et l'UE eLWA est adapté pour communiquer en même temps avec la station de base à LTE à un débit obtenu en soustrayant le deuxième débit du premier débit et avec le WLAN AP au deuxième débit pour assurer un équilibrage de charge entre la station de base à LTE et le WLAN AP.

2. Procédé selon la revendication 1, dans lequel le rapport des informations d'indication à la station de base à LTE comprend le fait de:
rapporter (302) les informations d'indication à la station de base à LTE en ajoutant les informations d'indication aux informations de capacité de l'UE eLWA.

3. Procédé selon l'une quelconque des revendications 1 à 2, dans lequel les informations d'indication comprennent un paramètre eLWA pour indiquer que l'UE eLWA supporte une communication simultanée avec la station de base à LTE et le WLAN AP.

4. Procédé selon l'une quelconque des revendications 1 à 2, dans lequel les informations d'indication comprennent:
un paramètre ue-CategoryUL et une première valeur du paramètre ue-CategoryUL, le paramètre ue-CategoryUL étant utilisé pour indiquer que l'UE eLWA supporte la transmission simultanée de données à la station de base à LTE et au WLAN AP, la première valeur de paramètre correspondant à un premier débit de liaison ascendante dans le premier débit, et le premier débit de liaison ascendante étant supérieur à un deuxième débit de liaison ascendante dans le deuxième débit; ou
un paramètre ue-CategoryDL et une deuxième valeur du paramètre ue-CategoryDL, le paramètre ue-CategoryDL étant utilisé pour indiquer que l'UE eLWA supporte la réception simultanée des données transmises par la station de base à LTE et par le WLAN AP, la deuxième valeur de paramètre correspondant à un premier débit de liaison descendante dans le premier débit, et le premier débit de liaison descendante étant supérieur à un deuxième débit de liaison descendante dans le deuxième débit.

5. Procédé selon la revendication 1, comprenant par ailleurs le fait de:
recevoir (306) une indication de planification transmise par la station de base à LTE, déterminer un premier débit de liaison ascendante dans le premier débit sur la base de l'indication de planification, et transmettre les données à la station de base au premier débit de liaison ascendante; ou
recevoir (308) les données transmises par la station de base à LTE à un premier débit de liaison descendante dans le premier débit.

6. Procédé de configuration de débit, appliqué dans une station de base à évolution à long terme, LTE, comprenant le fait de:
recevoir (203) les informations d'indication rapportées par un équipement d'utilisateur, UE, eLWA d'agrégation de réseau local sans fil, WLAN, à LTE améliorée, les informations d'indication étant utilisées pour indiquer une capacité de débit supportée par l'UE eLWA;
recevoir le deuxième débit transmis par l'UE eLWA; ou
obtenir le deuxième débit du WLAN AP; et
configurer (204, 304) un premier débit pour l'UE eLWA selon les informations d'indication, après réception ou obtention du deuxième débit, le premier débit étant supérieur au deuxième débit configuré par un point d'accès, AP, WLAN pour l'UE eLWA, de manière à permettre que l'UE eLWA communique avec la station de base à LTE à un débit obtenu en soustrayant le deuxième débit du premier débit.

7. Procédé selon la revendication 6, dans lequel la réception (203) des informations d'indication rapportées par l'équipement d'utilisateur, UE, eLWA d'agrégation de réseau local sans fil, WLAN, à LTE améliorée comprend le fait de:
recevoir les informations de capacité rapportées par l'UE eLWA et lire les informations d'indication des informations de capacité (303).

8. Procédé selon l'une quelconque des revendications 6 à 7, dans lequel les informations d'indication sont un paramètre eLWA destiné à indiquer que l'UE eLWA supporte une communication simultanée avec la station de base à LTE et le WLAN AP.

9. Procédé selon l'une quelconque des revendications 6 à 7, dans lequel les informations d'indication comprennent:
un paramètre ue-CategoryUL et une première valeur du paramètre ue-CategoryUL, le paramètre ue-CategoryUL étant utilisé pour indiquer que l'UE eLWA supporte la transmission simultanée de données à la station de base à LTE et au WLAN AP, la première valeur de paramètre correspondant à un premier débit de liaison ascendante dans le premier débit, et le premier débit de liaison ascendante étant supérieur à un deuxième débit de liaison ascendante dans le deuxième débit; ou
un paramètre ue-CategoryDL et une deuxième valeur du paramètre ue-CategoryDL, le paramètre ue-CategoryDL étant utilisé pour indiquer que l'UE eLWA supporte la réception simultanée des données transmises par la station de base à LTE et par le WLAN AP, la deuxième valeur de paramètre correspondant à un premier débit de liaison descendante dans le premier débit, et le premier débit de liaison descendante étant supérieur à un deuxième débit de liaison descendante dans le deuxième débit.

10. Procédé selon la revendication 6, comprenant par ailleurs le fait de:
transmettre (305) une indication de planification à l'UE eLWA, l'indication de planification étant utilisée pour indiquer un premier débit de liaison ascendante dans le premier débit de sorte que l'UE eLWA transmette les données à la station de base à LTE au premier débit de liaison ascendante; ou
transmettre (307) les données à l'UE eLWA à un premier débit de liaison descendante dans le premier débit.

11. Dispositif de configuration de débit, appliqué dans un équipement d'utilisateur, UE, eLWA d'agrégation de réseau local sans fil, WLAN, à évolution à long terme, LTE, améliorée, l'appareil comprenant:
un module de génération (410, 510) configuré pour générer les informations d'indication destinées à indiquer une capacité de débit supportée par l'UE eLWA; et
un module de rapport (420, 520) configuré pour rapporter les informations d'indication générées par le module de génération (410, 510) à une station de base à LTE, où les informations d'indication sont utilisées pour indiquer un premier débit de l'UE eLWA,
le dispositif comprenant par ailleurs:
un module de transmission (530) qui est configuré pour obtenir un deuxième débit configuré par un point d'accès de WLAN, WLAN AP, pour l'UE eLWA et pour transmettre le deuxième débit à la station de base à LTE, et
dans lequel le premier débit est configuré de manière à être supérieur à un deuxième débit configuré par un WLAN AP pour l'UE eLWA, et
l'UE eLWA est adapté pour communiquer en même temps avec la station de base à LTE à un débit obtenu en soustrayant le deuxième débit du premier débit et avec le WLAN AP au deuxième débit pour assurer un équilibrage de charge entre la station de base à LTE et le WLAN AP.

12. Dispositif selon la revendication 11, dans lequel le module de rapport (420) est par ailleurs configuré pour rapporter les informations d'indication à la station de base à LTE en ajoutant les informations d'indication aux informations de capacité de l'UE eLWA.

13. Dispositif selon l'une quelconque des revendications 11 à 12, dans lequel les informations d'indication sont un paramètre eLWA destiné à indiquer que l'UE eLWA supporte une communication simultanée avec la station de base à LTE et le WLAN AP.

14. Dispositif selon l'une quelconque des revendications 11 à 12, dans lequel les informations d'indication comprennent:
un paramètre ue-CategoryUL et une première valeur du paramètre ue-CategoryUL, le paramètre ue-CategoryUL étant utilisé pour indiquer que l'UE eLWA supporte la transmission simultanée de données à la station de base à LTE et au WLAN AP, la première valeur de paramètre correspondant à un premier débit de liaison ascendante dans le premier débit, et le premier débit de liaison ascendante étant supérieur à un deuxième débit de liaison ascendante dans le deuxième débit; ou
un paramètre ue-CategoryDL et une deuxième valeur du paramètre ue-CategoryDL, le paramètre ue-CategoryDL étant utilisé pour indiquer que l'UE eLWA supporte la réception simultanée des données transmises par la station de base à LTE et par le WLAN AP, la deuxième valeur de paramètre correspondant à un premier débit de liaison descendante dans le premier débit, et le premier débit de liaison descendante étant supérieur à un deuxième débit de liaison descendante dans le deuxième débit.

15. Dispositif selon la revendication 11, comprenant par ailleurs:
un premier module de transmission (540) configuré pour recevoir une indication de planification transmise par la station de base à LTE, pour déterminer un premier débit de liaison ascendante dans le premier débit sur base de l'indication de planification, et pour transmettre les données à la station de base au premier débit de liaison ascendante; ou
un deuxième module de transmission (550) configuré pour recevoir les données transmises par la station de base à LTE à un premier débit de liaison descendante dans le premier débit.

16. Dispositif de configuration de débit, appliqué dans une station de base à évolution à long terme, LTE, le dispositif comprenant:
un premier module de réception (610, 710) configuré pour recevoir les informations d'indication rapportées par un équipement d'utilisateur, UE, eLWA d'agrégation de réseau local sans fil, WLAN, à LTE améliorée, les informations d'indication étant utilisées pour indiquer une capacité de débit supportée par l'UE eLWA;
un deuxième module de réception (730) configuré pour recevoir un deuxième débit transmis par l'UE eLWA; ou
un module d'obtention (740) configuré pour obtenir le deuxième débit d'un WLAN AP,
un module de configuration (620, 720) configuré pour configurer un premier débit pour l'UE eLWA selon les informations d'indication reçues par le premier module de réception, après réception ou obtention du deuxième débit, où le premier débit est supérieur à un deuxième débit configuré par un point d'accès, AP, WLAN pour l'UE eLWA de manière à permettre que l'UE eLWA communique avec la station de base à LTE à un débit obtenu en soustrayant le deuxième débit du premier débit.

17. Dispositif selon la revendication 16, dans lequel le premier module de réception (610, 710) est par ailleurs configuré pour recevoir les informations de capacité rapportées par l'UE eLWA et pour lire les informations d'indication des informations de capacité.

18. Dispositif selon l'une quelconque des revendications 16 à 17, dans lequel les informations d'indication sont un paramètre elwa-Parameters destiné à indiquer que l'UE eLWA supporte une communication simultanée avec la station de base à LTE et le WLAN AP.

19. Dispositif selon l'une quelconque des revendications 16 à 17, dans lequel les informations d'indication comprennent:
un paramètre ue-CategoryUL et une première valeur du paramètre ue-CategoryUL, le paramètre ue-CategoryUL étant utilisé pour indiquer que l'UE eLWA supporte la transmission simultanée de données à la station de base à LTE et au WLAN AP, la première valeur de paramètre correspondant à un premier débit de liaison ascendante dans le premier débit, et le premier débit de liaison ascendante étant supérieur à un deuxième débit de liaison ascendante dans le deuxième débit; ou
un paramètre ue-CategoryDL et une deuxième valeur du paramètre ue-CategoryDL, le paramètre ue-CategoryDL étant utilisé pour indiquer que l'UE eLWA supporte la réception simultanée des données transmises par la station de base à LTE et par le WLAN AP, la deuxième valeur de paramètre correspondant à un premier débit de liaison descendante dans le premier débit, et le premier débit de liaison descendante étant supérieur à un deuxième débit de liaison descendante dans le deuxième débit.

20. Dispositif selon la revendication 16, comprenant par ailleurs:
un premier module de transmission (750) configuré pour transmettre une indication de planification à l'UE eLWA, l'indication de planification étant utilisée pour indiquer un premier débit de liaison ascendante dans le premier débit de sorte que l'UE eLWA transmette les données à la station de base à LTE au premier débit de liaison ascendante; ou
un deuxième module de transmission (760) configuré pour transmettre les données à l'UE eLWA à un premier débit de liaison descendante dans le premier débit.

21. Dispositif de calcul, adapté pour être utilisé dans un système d'agrégation de réseau local sans fil, WLAN, à évolution à long terme, LTE, le dispositif comprenant:
un processeur (818); et
une mémoire (804) destinée à mémoriser des instructions exécutables par le processeur (818);
dans lequel le processeur (818) est configuré pour exécuter les instructions mémorisées pour réaliser le procédé selon l'une quelconque des revendications 1 à 10.
